# EUROPEAN PATENT SPECIFICATION

(11) **EP 1 921 875 B1**
(45) Date of publication and mention of the grant of the patent: **23.11.2011**
(21) Application number: 06122779.9
(22) Date of filing: 23.10.2006
(51) Int. Cl.: H04W 48/16

(54) **System and method of network identifier polling**
System und Verfahren zum Abfragen einer Netzwerkkennung
Système et procédé pour l'interrogation d'un identificateur de réseau

(43) Date of publication of application: 14.05.2008
(73) Proprietor: RESEARCH IN MOTION LIMITED, Waterloo, Ontario N2L 3W8 (CA)
(72) Inventor: Puri, Ajay, Brampton Ontario L6Y 5G6 (CA); Munje, Arun, Ottawa Ontario K2W 1E3 (CA); Lateef, Ahmad Daud, Kanata Nova Scotia K2W 1H8 (CA); Chaudry, Shahid R., Kanata Ontario K2W 1EV (CA); Maurice, Robbie, Waterloo Ontario N2V 2M8 (CA)
(74) Representative: MERH-IP Matias Erny Reichl Hoffmann

(56) References cited:
- EP-A- 1 610 507
- EP-A2- 1 113 690
- GB-A- 2 413 737
- US-A1- 2005 070 275

## Description

The application relates generally to wireless devices, and more particularly to polling for network identifier values.

In a wireless system, a wireless device typically has a radio layer, a transport layer, and an application layer. The radio layer includes a protocol stack and is typically aware of the network identifier of the zone in which the wireless device resides. In a CDMA (code division multiple access) system, the network identifier is a SID (system identifier). In a GPRS system, the network identifier includes both an mcc (mobile country code) and an mnc (mobile network code).

Unfortunately, when there has been a change in the network identifier value, the radio layer does not always inform the transport layer. Therefore, the transport layer periodically polls the radio layer for the network identifier value. A high frequency of polls allows the transport layer to maintain an accurate network identifier value. However, polling the radio layer for network identifier values at a high frequency consumes battery power of the wireless device.

US-A-2005/007275 relates to mobile stations roaming between access points. A variable roaming timer is used to put off an attempt to roam based on various criteria including received signal strength so that if signal quality is low attempts to roam (i.e. connect to another access point) will be more frequent.

EP-A-1113690 relates to a communication system such as a personal computer connected to remote terminals in which a computer periodically searches for another terminal and the period is variable.

EP-A-1610507 proposes a variable scan rate for WLAN applications in order to reduce the power consumption at the time of an automatic homing operation performed between a base station and a WLAN terminal.

GB-A-2413737 proposes to prolong battery life in a mobile communication device by reducing the frequency of a network search if no network is detected.

In all of the foregoing prior art proposals any polling is between one device (mobile/PC) and the network.

### General

According to a broad aspect there may be provided a method in a wireless device comprising a network identifier polling component and a radio component, in which: the network identifier polling component polls the radio component for a network identifier value on a first polling frequency basis; upon occurrence of an event of a predefined type, the network identifier polling component polls the radio component for the network identifier value on a more frequent basis than the first polling frequency basis; and at some later time, the network identifier polling component polls the radio component for the network identifier value on the first polling frequency basis; wherein the polling of the radio component by the polling component for the network identifier value comprises actively requesting the network identifier value from the radio component

According to another broad aspect there may be provided a computer readable medium having computer executable instructions stored thereon for execution on a processor so as to implement the method summarized above.

According to a broad aspect there may be provided a wireless device comprising network identifier polling means adapted to implement the method summarized above.

### Brief Description of the Drawings

Embodiments will now be described with reference to the attached drawings in which:
Figure 1 is a schematic of an example wireless device;
Figure 2 is a flowchart of an example method of polling for a network identifier in which an event triggers polling on a more frequent basis;
Figure 3 is a flowchart of an example method of initiating a registration based on an observed network identifier change;
Figure 4 is a flowchart of example events triggering polling on the more frequent basis;
Figure 5 is a flowchart of an example method of polling in a manner that is dependent upon the event that has occurred;
Figure 6 is a flowchart of an example method of polling on the more frequent basis; and
Figures 7A through 7D are graphs providing examples of the polling on the more frequent basis.

### Description of Preferred Embodiments

### Wireless Device

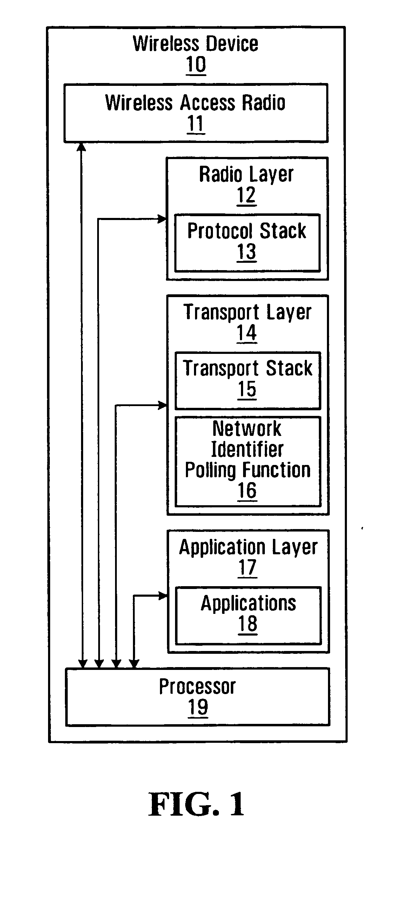

Referring now to Figure 1, shown is a schematic of an example wireless device 10. The wireless device 10 has a processor 19 coupled to a wireless access radio 11, a radio layer 12, a transport layer 14, and an application layer 17. The radio layer 12 has a protocol stack 13, while the application layer 17 has a plurality of applications 18.
The transport layer 14 has a transport stack 15 and a network identifier polling function 16. The wireless device 10 may have other components, but they are not shown for sake of simplicity.

In Figure 1, the network identifier polling function 16 is shown as part of the transport layer 14. In other embodiments, the network identifier polling function is in the application layer. In some embodiments, the application wraps the transport stack so all interaction between the radio and transport stack goes through the application layer (Radio<->App<->Transport). In this case, since the notifications of network identifier change are expected to come from the application layer, it is the application layer that is doing the polling.

In operation, the wireless device 10 is adapted to communicate with a wireless network (not shown) via the wireless access radio 11. Such communication may be in respect of one or more of the applications 18 of the application layer 17. The radio layer 12 uses the protocol stack 13 to facilitate protocol communications over the wireless access radio 11. The radio layer 12 is aware of the network identifier value of the zone in which the wireless device 10 resides. The transport layer 14 polls for network identifier values from the radio layer 12. In some implementations, if there has been a change in the network identifier value, then the transport layer 14 initiates a registration to ensure that the wireless device 10 is "always-on". Always-on connectivity may be important to one or more of the applications 18 of the application layer 17.

According to an embodiment of the application, the network identifier polling function 16 implements a polling scheme whereby the frequency of polling is dependent upon one or more predefined events. The transport layer 14 polls for a network identifier value on a first basis; however, upon occurrence of an event of a predefined type, the transport layer 14 polls for the network identifier value on a more frequent basis than the first basis. The higher frequency of polls allows for any changes to the network identifier value to be detected more quickly than if a slower frequency of polling was used. At some later time, the transport layer 14 resumes polling on the first basis so as to conserve battery power.

There are many possibilities for the polling on the first basis and for the polling on the more frequent basis. The polling on the first basis involves any appropriate polling scheme such that polling is performed at a relatively low frequency or range of frequencies so as to conserve battery power. The polling on the more frequent basis involves any appropriate polling scheme such that polling is performed on a more frequent basis than the polling on the first basis. Example implementation details of the polling schemes are provided with reference to the subsequent Figures.

In the illustrated example, the network identifier polling function 16 is implemented as software and is executed on the processor 19. However, more generally, the network identifier polling function 16 may be implemented as software, hardware, firmware, or any appropriate combination thereof.

The network identifier being polled is implementation-specific and typically depends on the type of wireless system in which the wireless device 10 resides. There are many possibilities for the wireless system. In some implementations, the wireless device 10 is in a CDMA (Code Division Multiple Access) system and the network identifier is a SID (system identifier). For CDMA systems, always-on connectivity involves PPP (point-to-point protocol) connectivity. In some implementations, the wireless system includes an EVDO (Evolution Data Optimised) network. EVDO is an overlay to CDMA 1X. From data connectivity point of view, EVDO and CDMA share the same PCF (Packet Control Function) box on the network side, which the wireless device connects to in order to establish a new connection. PCF is sitting behind the PDSN (Packet Data Serving Node) in network topology. In some network implementations, EVDO overlay goes further than CDMA signal so there is coverage by EVDO signals but not CDMA signals. For such areas, monitoring network identifier change of EVDO network will allow reestablishment of service if EVDO network identifier changes. The network identifier for EVDO includes a Sector ID and/or a Color Code.

In other implementations, the wireless device 10 is in a GPRS (General Packet Radio Service) system and the network identifier includes both an mcc (mobile country code) and mnc (mobile network code). For GPRS systems, always-on connectivity involves PDP (Packet Data Protocol) connectivity. In some implementations, the wireless system includes an EDGE (Evolution Data Optimised) network. Implementations with EDGE follow similar principles discussed above for EVDO, as EDGE is an enhancement to GPRS, which is an overlay to GSM.

In other implementations, the wireless device 10 is in a UMTS (Universal Mobile Telecommunications System) and the network identifier includes both an mcc and an mnc. Other wireless systems and associated network identifiers are possible. More generally, embodiments of the application are applicable to any wireless system whereby the radio layer does not provide network identification change notifications to the transport or application layer.

It is to be understood that the wireless device 10 is shown with a very specific arrangement of components and is for example purposes only. Different arrangements of components are possible. The wireless device 10 is shown with "layers" such as the radio layer 12 for implementing various functionality; however, more generally, any "function", whether layered or not layered, may be implemented. Furthermore, components that are shown separately may be combined as a single component. For example, in some implementations, the network identifier polling function 16 is combined with the transport stack 15 as a single component. Other combinations are possible.

### Method in a Wireless Device

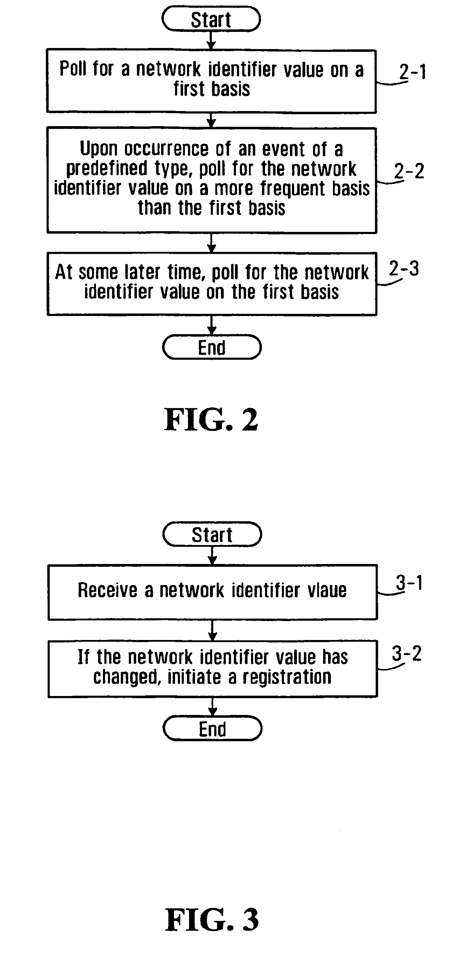

Referring now to Figures 2 through 6, shown are flowcharts of an example method of polling for a network identifier in which an event triggers polling on a more frequent basis. This method may be implemented in a wireless device, for example by the network identifier polling function 16 of the transport layer 14 shown in Figure 1.

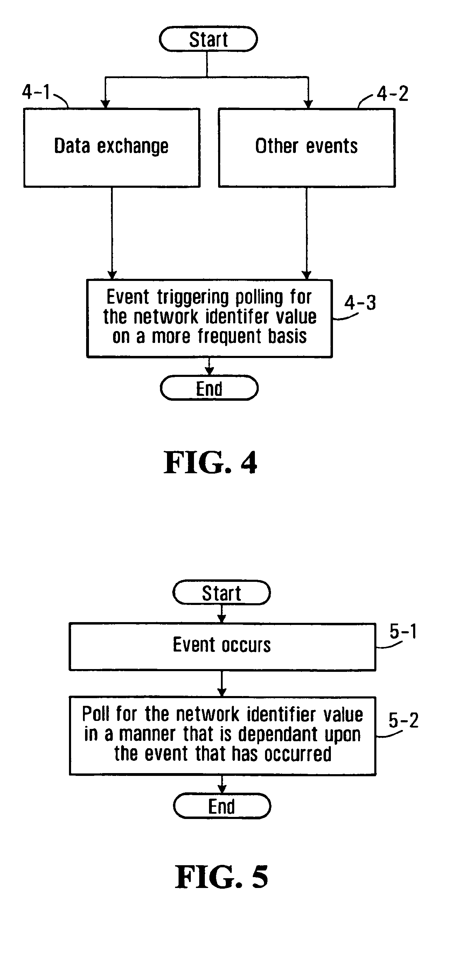

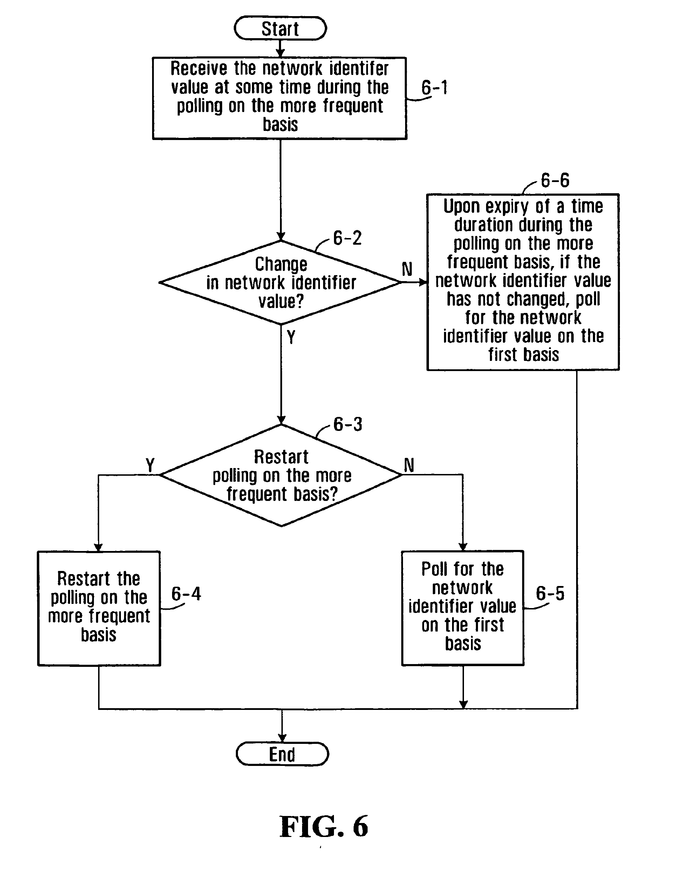

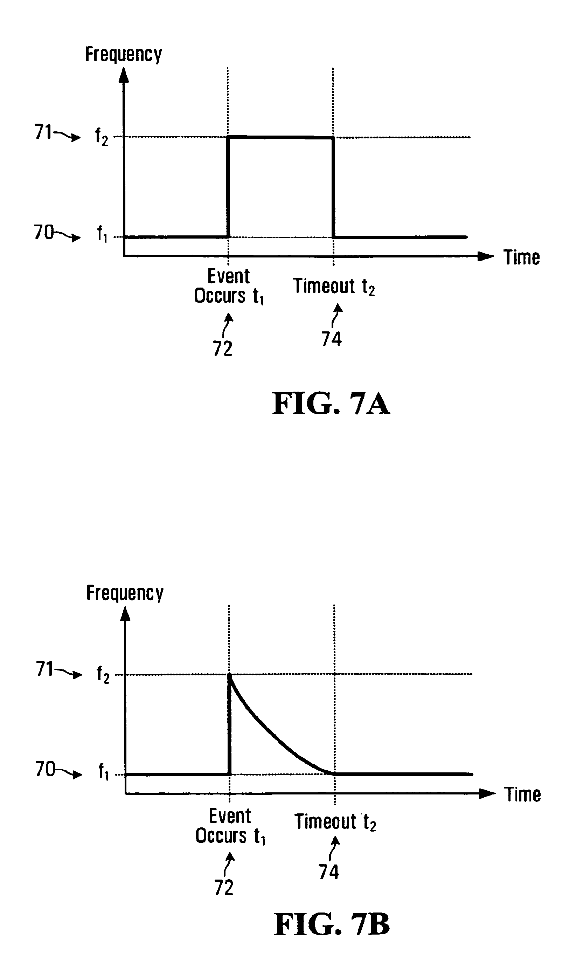

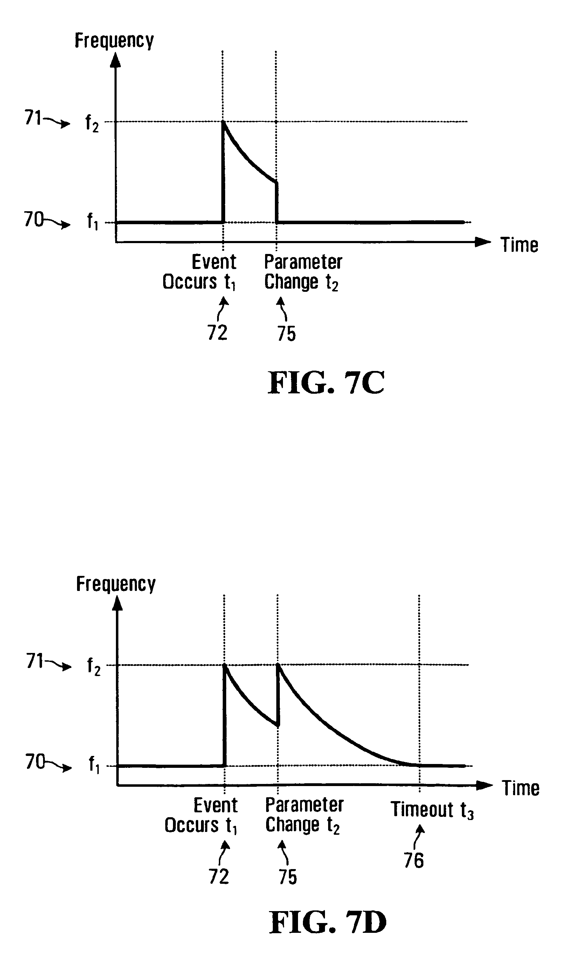

Referring first to Figure 2, at step 2-1, the transport layer polls for a network identifier value on a first basis. At step 2-2, upon occurrence of an event of a predefined type, the transport layer polls for the network identifier value on a more frequent basis than the first basis. Further details of the event are provided below with reference to Figures 4 and 5; further details of the polling on the more frequent basis are provided below with reference to Figures 6 and 7. At step 2-3, at some later time, the transport layer polls for the network identifier value on the first basis.

In some implementations, if the transport layer receives the network identifier value from the radio layer and observes that there has been a network identifier change, then the transport layer initiates a registration. Referring now to Figure 3, shown is a flowchart of an example method of initiating a registration based on an observed network identifier change. At step 3-1, the transport layer receives a network identifier value. At step 3-2, if the network identifier value has changed, then the transport layer initiates a registration so as to maintain always-on connectivity.

There are many implementation specific possibilities for the event that is predetermined to trigger polling on the more frequent basis. In some implementations, if it is known that changes to a network identifier value are more likely upon occurrence of a particular event, then the particular event is predetermined to trigger the higher frequency of polling. In other implementations, if it is known that having an accurate network identifier value is more important upon occurrence of a particular event, then the particular event is predetermined to trigger the higher frequency of polling. Referring now to Figure 4, shown is a flowchart of example events triggering polling on the more frequent basis. If there is a data exchange at step 4-1, then at step 4-3 there has been an event triggering polling for the network identifier value on a more frequent basis. Other events are possible as indicated in step 4-2. Suitable events are those that may occur when the network identifier changes, the logic being that if such an event has occurred, then maybe the network identifier has changed so it is a good time to check. Since "always-on" connectivity is relevant when sending/receiving data, it is a more relevant event to check for network identifier changes instead of a user tapping a button for example.

In some implementations, the polling on the more frequent basis is performed in a manner that is dependent upon the event that has occurred. Referring now to Figure 5, shown is a flowchart of an example method of polling in a manner that is dependent upon the event that has occurred. At step 5-1, an event triggering polling on the more frequent basis occurs. Example events that may trigger the polling on the more frequent basis have been provided above and are therefore not repeated here. At step 5-2, the transport layer polls for the network identifier value in a manner that is dependent upon the event that has occurred.

There are many ways that the polling on the more frequent basis can be dependent upon the event that has occurred. In some implementations, the transport layer polls for the network identifier value for a time duration that is dependent upon the event that has occurred. In other implementations, the transport layer polls for the network identifier value with a constant frequency that is dependent upon the event that has occurred. In other implementations, the transport layer polls for the network identifier value with a variable frequency that is dependent upon the event that has occurred. Other implementations are possible.

Referring now to Figure 6, shown is a flowchart of an example method of polling on the more frequent basis. If at step 6-1 the transport layer receives the network identifier value at some time during the polling on the more frequent basis, then the transport layer determines at step 6-2 whether or not the network identifier value has changed. In some implementations, if the network identifier value has changed, then the transport layer initiates a registration. At step 6-2 the transport layer determines whether or not it should restart polling on the more frequent basis. Restarting the polling on the more frequent basis may lengthen the time during which polling on the more frequent basis is performed. It may also change the frequency of polling in the event that the polling on the more frequent basis is implemented with a variable frequency of polling. An example is provided below with reference to Figure 7D.
If the transport layer determines that it should restart polling on the more frequent basis, then at step 6-4 the transport layer restarts the polling on the more frequent basis. Otherwise, at step 6-5 the transport layer polls for the network identifier value on the first basis. However, if there has been no change in the network identifier value upon expiry of a time duration during the polling on the more frequent basis, then at step 6-6 the transport layer polls for the network identifier value on the first basis. This is known as a timeout.

There are many ways that the transport layer may determine whether or not the polling on the more frequent basis should be restarted. In some implementations, the transport layer makes this determination based on user input. For example, the user of the wireless device can input their preference for PPP connectivity versus preserving battery power. If the user prefers to conserve battery power, then the transport layer does not restart the polling on the more frequent basis. However, if the user has a stronger preference for PPP connectivity, then the transport layer restarts the polling on the more frequent basis. In other implementations, the transport layer determines whether or not to restart polling based on a hard-coded setting that cannot be manipulated by the user. Other implementations are possible.

In some implementations, the transport layer polls for the network identifier only if the wireless access radio of the wireless device is on. If the wireless access radio is not on, then PPP connectivity is no longer possible. Therefore, there is little or no use in polling for the network identifier when the wireless access radio is off.

### Polling Examples

Referring now to Figures 7A through 7C, shown are graphs providing examples of the polling by the transport layer on the more frequent basis. Each graph compares frequency of polling versus time and illustrates example results that may be achieved by various implementations of the method described above with reference to Figures 2 through 6. It is to be understood that these graphs are very specific and are for example purposes only. In each example, references to an event triggering the polling on the more frequent basis are made. References to observing network identifier changes, and timeouts while waiting for a change in a network identifier are also made. Example details of these topics have been provided above and therefore are not repeated here.

Referring first to Figure 7A, the polling frequency starts at f₁ 70 and remains constant until an event occurs at t₁ 72. Upon the event at t₁ 72, the frequency of polling increases to f₂ 71. The frequency of polling remains constant at f₂ 71 until a timeout occurs at t₂ 74 at which time the frequency of polling decreases back down to f₁ 70.

In the illustrated example, the polling for the network identifier value on the more frequent basis, f₂ 71, is done so with a constant frequency of polling. However, in other implementations, a variable frequency of polling is accomplished. Figure 7B provides an example of this.

Referring now to Figure 7B, the polling frequency starts at f₁ 70 and remains constant until an event occurs at t₁ 72. Upon the event at t₁ 72, the frequency of polling increases to f₂ 71. The frequency of polling decreases in a non-linear manner until a timeout at t₂ 74. At this time, the frequency of polling has decreased to f₁ 70.

In the illustrated example, the decrease in frequency is non-linear. However, in other implementations, the decrease in frequency is linear. More generally, the decrease in frequency may be linear, non-linear, or an appropriate combination thereof (i.e. portions that are linear and portions that are non-linear).

In the illustrated example, the frequency of polling decreases to f₁ 70 at the same time as the timeout at t₂ 74. However, in other implementations, the frequency of polling is greater than f₁ 70 at the timeout at t₂ 74. In some implementations, the frequency of polling decreases to f₁ 70 upon the timeout at t₂ 74.

In the examples provided above with reference to Figures 7A and 7B, it is assumed that there is a timeout at t₂ 74, as there is no observed change in network identifier value. Figures 7C and 7D provide examples of the situation in which polling frequency is dependent upon observing an additional a change in network identifier value.

Referring now to Figure 7C, the polling frequency starts at f₁ 70 and remains constant until an event occurs at t₁ 72. Upon the event at t₁ 72, the frequency of polling increases to f₂ 71. The frequency of polling decreases in a non-linear manner until a parameter change is observed at t₂ 75. At this time, the frequency of polling decreases to f₁ 70.

In the illustrated example, the observing of a network identifier change prompts the polling on the more frequent basis to end. However, in other implementations, the polling on the more frequent basis is restarted. An example of this is provided below with reference to Figure 7D.

Referring now to Figure 7D, the polling frequency starts at f₁ 70 and remains constant until an event occurs at t₁ 72. Upon the event at t₁ 72, the frequency of polling increases to f₂ 71. The frequency of polling decreases in a non-linear manner until a parameter change is observed at t₂ 75. At this time, the frequency of polling increases back to f₁ 71. The polling on the more frequent basis is restarted. The frequency of polling decreases in a non-linear manner until a timeout at t₃ 76.

In the illustrated example, the timeout at t₃ 76 occurs because the transport layer does not observe another network identifier value change. In some implementations, if another network identifier value change is observed before t₃ 76, then the polling on the more frequent basis is restarted a second time. In some implementations, the polling on the more frequent basis can be restarted many times so long as network identifier changes are observed before a timeout period.

With reference to Figures 7A through 7D, there are many implementation specific values for f₁ 70 and f₂ 71. In some implementations, the transport layer determines f₁ 70 and f₂ 71 based on a time period between polls. The polls during the first basis are separated by a first time period while the polls during the more frequent basis are separated by a variable time period between polls, the variable time period between polls starting at a minimum value and being incremented with each poll unless the variable time period reaches a maximum value. In some implementations, the first time period is equal to the maximum value of the variable time period during the polling on the more frequent basis. In specific implementations, the minimum value is 5 seconds and the maximum value is 15 minutes. Other implementations are possible.
Numerous modifications and variations of the present application are possible in light of the above teachings. It is therefore to be understood that within the scope of the appended claims, the application may be practised otherwise than as specifically described herein.

## Claims

1. A method in a wireless device (10) comprising a network identifier polling component (16) and a radio component (12), in which:
the network identifier polling component polls (2-1) the radio component for a network identifier value on a first polling frequency basis;
upon occurrence of an event of a predefined type, the network identifier polling component polls (2-2) the radio component for the network identifier value on a more frequent basis than the first polling frequency basis; and
at some later time, the network identifier polling component polls (2-3) the radio component for the network identifier value on the first polling frequency basis;
wherein the polling (2-1,2-2,2-3) of the radio component by the polling component for the network identifier value comprises actively requesting the network identifier value from the radio component.

2. The method of claim 1 wherein the radio component (12) is a radio layer (12), and the network identifier polling component (16) is part of a transport layer (14) or an application layer (17).

3. The method of claim 1 or claim 2 wherein the predefined type of event comprises:
an event type upon the occurrence of which changes to a network identifier value are more likely; and/or
an event type upon the occurrence of which an accurate network identifier value is more important.

4. The method of any one of claims 1 to 3 in which:
the network identifier polling component receives (3-1) the network identifier value; and
if the network identifier value has changed, the network identifier polling component initiates (3-2) a registration.

5. The method of any one of claims 1 to 4 wherein the predefined type of event comprises a data exchange (4-1).

6. The method of any one of claims 1 to 5 further comprising:
the network identifier polling component receiving (6-1) the network identifier value at some time during the polling on the more frequent basis;
the network identifier polling component determining (6-2) if the network identifier value has changed; and
if the network identifier value has changed, the network identifier polling component polling (6-5) for the network identifier value on the first polling frequency basis or restarting (6-4) the polling for the network identifier value on the more frequent basis.

7. The method of any one of claims 1 to 5 further comprising:
upon expiry of a time duration during the polling on the more frequent basis, if the network identifier value has not changed, the network identifier polling component polling (6-6) for the network identifier value on the first polling frequency basis.

8. The method of any one of claims 1 to 7 wherein polling for the network identifier value on the more frequent basis comprises:
polling for the network identifier value with a constant frequency of polling; or
polling (2-2) for the network identifier value with a variable frequency of polling.

9. The method of claim 8 wherein polling for the network identifier value with the variable frequency of polling comprises:
polling (2-2) for the network identifier value with a frequency that decreases over time.

10. The method of claim 9 wherein polling for the network identifier value with the frequency that decreases over time comprises:
polling (2-2) for the network identifier value with a frequency that decreases linearly over time; or
polling (2-2) for the network identifier value with a frequency that decreases non-linearly over time.

11. The method of claim 9 wherein polling for the network identifier value with the frequency that decreases over time comprises:
polling (2-2) for the network identifier value with a variable time duration between individual polls, the variable time duration between individual polls starting at a minimum value and being incremented with each poll unless the variable time duration reaches a maximum value.

12. The method of claim 11 wherein individual polls during the first polling frequency basis are separated by a first time duration, the first time duration being equal to the maximum value of the time duration during the polling on the more frequent basis.

13. The method of claim 11 wherein the minimum value is 5 seconds and the maximum value is 15 minutes.

14. The method of any one of claims 1 to 13 wherein polling for the network identifier value on the more frequent basis comprises:
polling (5-2) for the network identifier value in a manner that is dependent upon the event that has occurred.

15. The method of claim 14 wherein polling for the network identifier value in the manner that is dependent upon the event that has occurred comprises at least one of:
polling (5-2) for the network identifier value for a time duration that is dependent upon the event that has occurred;
polling (5-2) for the network identifier value with a constant frequency that is dependent upon the event that has occurred; and
polling (5-2) for the network identifier value with a variable frequency that is dependent upon the event that has occurred.

16. The method of any one of claims 1 to 15 wherein polling for the network identifier occurs only if a wireless access radio (11) is on.

17. The method of any one of claims 1 to 16 wherein the network identifier value comprises any of:
a System Identifier 'SID' value;
both a mobile country code 'mcc' value and a mobile network code 'mnc' value; and/or
a Sector ID value or a Color Code value.

18. A computer readable medium (16) having computer executable instructions stored thereon for execution on a processor (19) of a computing device (10) so as to implement the method of any one of claims 1 to 17.

19. A wireless device (10) comprising a network identifier polling component (16) and a radio component (12) adapted to perform the processing steps of the method of any one of claims 1 to 17.

## Patentansprüche

1. Verfahren in einer Drahtlosvorrichtung (10) mit einer Netzidentifizierabfragekomponente (16) und einer Funkkomponente (12), in der:
die Netzidentifizierabfragekomponente die Funkkomponente nach einem Netzidentifizierwert auf einer ersten Abfragefrequenzbasis abfragt (2-1)
nach dem Erfolgen eines Ereignisses eines vorher festgelegten Typs die Netzidentifizierabfragekomponente die Funkkomponente nach dem Netzidentifizierwert auf einer häufigeren Basis als die erste Abfragefrequenzbasis abfragt (2-2) und
zu einer späteren Zeit die Netzidentifizierabfragekomponente die Funkkomponente nach dem Netzidentifizierwert auf der ersten Abfragefrequenzbasis abfragt (2-3),
wobei das Abfragen (2-1, 2-2, 2-3) der Funkkomponente von der Abfragekomponente nach dem Netzidentifizierwert ein aktives Anfragen nach dem Netzidentifizierwert von der Funkkomponente aufweist.

2. Verfahren nach Anspruch 1, wobei die Funkkomponente (12) eine Funkschicht (12) ist und die Netzidentifizierabfragekomponente (16) Teil einer Übertragungsschicht (14) oder einer Anwendungsschicht (17) ist.

3. Verfahren nach Anspruch 1 oder 2, wobei der vorher festgelegte Typ des Ereignisses Folgendes aufweist:
einen Ereignistyp, nach dessen Erfolgen Änderungen an einem Netzidentifizierwert wahrscheinlicher sind, und/oder
einen Ereignistyp, nach dessen Erfolgen ein genauer Netzidentifizierwert wichtiger ist.

4. Verfahren nach einem der Ansprüche 1 bis 3, in welchem die Netzidentifizierabfragekomponente den Netzidentifizierwert empfängt (3-1), und
wenn sich der Netzidentifizierwert geändert hat, die Netzidentifizierabfragekomponente eine Registrierung einleitet (3-2).

5. Verfahren nach einem der Ansprüche 1 bis 4, wobei der vorher festgelegte Typ des Ereignisses einen Datenaustausch aufweist (4-1).

6. Verfahren nach einem der Ansprüche 1 bis 5, wobei ferner
die Netzidentifizierabfragekomponente den Netzidentifizierwert zu einer Zeit während des Abfragens auf der häufigeren Basis empfängt (6-1),
die Netzidentifizierabfragekomponente bestimmt (6-2), ob sich der Netzidentifizierwert geändert hat, und
wenn sich der Netzidentifizierwert geändert hat, die Netzidentifizierabfragekomponente nach dem Netzidentifizierwert auf der ersten Abfragefrequenzbasis abfragt (6-5) oder das Abfragen nach dem Netzidentifizierwert auf der häufigeren Basis neu anfängt (6-4).

7. Verfahren nach einem der Ansprüche 1 bis 5, wobei ferner:
nach dem Ablaufen einer Zeitdauer während des Abfragens auf der häufigeren Basis die Netzidentifizierabfragekomponente nach dem Netzidentifizierwert auf der ersten Abfragefrequenzbasis abfragt (6-6), wenn sich der Netzidentifizierwert nicht geändert hat.

8. Verfahren nach einem der Ansprüche 1 bis 7, wobei das Abfragen nach dem Netzidentifizierwert auf der häufigeren Basis Folgendes aufweist:
Abfragen nach dem Netzidentifizierwert mit einer konstanten Abfragefrequenz oder
Abfragen (2-2) nach dem Netzidentifizierwert mit einer variablen Abfragefreq uenz.

9. Verfahren nach Anspruch 8, wobei Abfragen nach dem Netzidentifizierwert mit der variablen Abfragefrequenz Folgendes aufweist:
Abfragen (2-2) nach dem Netzidentifizierwert mit einer Frequenz, die mit der Zeit abnimmt.

10. Verfahren nach Anspruch 9, wobei das Abfragen nach dem Netzidentifizierwert mit der Frequenz, die mit der Zeit abnimmt, Folgendes aufweist:
Abfragen (2-2) nach dem Netzidentifizierwert mit einer Frequenz, die linear mit der Zeit abnimmt, oder
Abfragen (2-2) nach dem Netzidentifizierwert mit einer Frequenz, die nicht-linear mit der Zeit abnimmt.

11. Verfahren nach Anspruch 9, wobei das Abfragen nach dem Netzidentifizierwert mit der Frequenz, die mit der Zeit abnimmt, Folgendes aufweist:
Abfragen (2-2) nach dem Netzidentifizierwert mit einer variablen Zeitdauer zwischen einzelnen Abfragen, wobei die variable Zeitdauer zwischen einzelnen Abfragen an einem Minimalwert beginnt und mit jeder Abfrage vergrößert wird, es sei denn, die variable Zeitdauer erreicht einen Maximalwert.

12. Verfahren nach Anspruch 11, wobei die einzelnen Anfragen während der ersten Abfragefrequenzbasis um eine erste Zeitdauer getrennt sind, wobei die erste Zeitdauer gleich groß wie der Maximalwert der Zeitdauer während des Abfragens auf der häufigeren Basis ist.

13. Verfahren nach Anspruch 11, wobei der Minimalwert 5 Sekunden und der Maximalwert 15 Minuten ist.

14. Verfahren nach einem der Ansprüche 1 bis 13, wobei das Abfragen nach dem Netzidentifizierwert auf der häufigeren Basis Folgendes aufweist:
Abfragen (5-2) nach dem Netzidentifizierwert in einer Weise, die vom Ereignis abhängt, das erfolgt ist.

15. Verfahren nach Anspruch 14, wobei das Abfragen nach dem Netzidentifizierwert in einer Weise, die vom Ereignis abhängt, das erfolgt ist, mindestens eines aufweist aus:
Abfragen (5-2) nach dem Netzidentifizierwert für eine Zeitdauer, die vom Ereignis abhängt, das erfolgt ist,
Abfragen (5-2) nach dem Netzidentifizierwert mit einer konstanten Frequenz, die vom Ereignis abhängt, das erfolgt ist, und
Abfragen (5-2) nach dem Netzidentifizierwert mit einer variablen Frequenz, die vom Ereignis abhängt, das erfolgt ist.

16. Verfahren nach einem der Ansprüche 1 bis 15, wobei das Abfragen nach dem Netzidentifizierwert nur erfolgt, wenn ein Drahtloszugriffsfunk (11) aktiviert ist.

17. Verfahren nach einem der Ansprüche 1 bis 16, wobei der Netzidentifizierwert eines aus Folgendem aufweist:
einem Systemidentifizier 'SID' -Wert,
sowohl einem Mobillandcode 'mmc'-Wert als auch einem Mobilnetzcode 'mnc'-Wert und/oder
einem Sektor-ID-Wert oder einem Farbcodewert.

18. Computerlesbares Medium (16) mit von einem Computer ausführbaren Befehlen, die darauf zum Ausführen auf einem Prozessor (19) einer Rechenvorrichtung (10) gespeichert sind, um so das Verfahren nach einem der Ansprüche 1 bis 17 zu implementieren.

19. Drahtlosvorrichtung (10) mit einer Netzidentifizierabfragekomponente (16) und einer Funkkomponente (12), die dazu ausgelegt sind, die Bearbeitungsschritte des Verfahrens nach einem der Ansprüche 1 bis 17 durchzuführen.

## Revendications

1. Procédé mis en oeuvre dans un dispositif sans fil (10) comprenant un composant (16) d'interrogation d'identifiant de réseau et un composant radio (12), dans lequel :
le composant d'interrogation d'identifiant de réseau demande (2-1) une valeur d'identifiant de réseau par interrogation du composant radio sur la base d'une première fréquence d'interrogation ;
lorsqu'un événement d'un type prédéfini se produit, le composant d'interrogation d'identifiant de réseau demande (2-2) la valeur d'identifiant de réseau par interrogation du composant radio plus fréquemment que la première fréquence d'interrogation ; et
plus tard, le composant d'interrogation d'identifiant de réseau demande (2-3) la valeur d'identifiant de réseau par interrogation du composant radio sur la base de la première fréquence d'interrogation ;
où la demande (2-1, 2-2, 2-3) de la valeur d'identifiant de réseau par interrogation du composant radio par le composant d'interrogation comprend le fait de demander activement la valeur d'identifiant de réseau à partir du composant radio.

2. Procédé de la revendication 1, dans lequel le composant radio (12) est une couche radio (12), et le composant (16) d'interrogation d'identifiant de réseau fait partie d'une couche (14) de transport ou d'une couche (17) applicative.

3. Procédé de la revendication 1 ou de la revendication 2, dans lequel le type d'événement prédéfini comprend :
un type d'événement qui, en se produisant, entraîne une plus forte probabilité de changements au niveau d'une valeur d'identifiant de réseau ; et/ou
un type d'événement qui, en se produisant, fait qu'une valeur précise d'identifiant de réseau est plus importante.

4. Procédé de l'une quelconque des revendications 1 à 3, dans lequel :
le composant d'interrogation d'identifiant de réseau reçoit (3-1) la valeur d'identifiant de réseau ; et
si la valeur d'identifiant de réseau a changé, le composant d'interrogation d'identifiant de réseau lance (3-2) un enregistrement.

5. Procédé de l'une quelconque des revendications 1 à 4, dans lequel le type d'événement prédéfini comprend un échange de données (4-1).

6. Procédé de l'une quelconque des revendications 1 à 5, comprenant en outré :
la réception (6-1) par le composant d'interrogation d'identifiant de réseau de la valeur d'identifiant de réseau à un certain moment durant l'interrogation sur la base la plus fréquente ;
la détermination (6-2) par le composant d'interrogation d'identifiant de réseau que la valeur d'identifiant de réseau a changé ou non ; et
si la valeur d'identifiant de réseau a changé, la demande de la valeur d'identifiant de réseau par interrogation (6-5) par le composant d'interrogation d'identifiant de réseau sur la base de la première fréquence d'interrogation ou le recommencement de la demande de la valeur d'identifiant de réseau par interrogation (6-4) sur la base la plus fréquente.

7. Procédé de l'une quelconque des revendications 1 à 5, comprenant en outré :
la demande de la valeur d'identifiant de réseau par interrogation (6-6), à l'expiration d'une durée pendant l'interrogation sur la base la plus fréquente, si la valeur d'identifiant de réseau n'a pas changé, par le composant d'interrogation d'identifiant de réseau sur la base de la première fréquence d'interrogation.

8. Procédé de l'une quelconque des revendications 1 à 7, dans lequel la demande de la valeur d'identifiant de réseau par interrogation sur la base la plus fréquente comprend le fait :
de demander la valeur d'identifiant de réseau par interrogation avec une fréquence d'interrogation constante; ou
de demander la valeur d'identifiant de réseau par interrogation (2-2) avec une fréquence d'interrogation variable.

9. Procédé de la revendication 8, dans lequel la demande de la valeur d'identifiant de réseau par interrogation avec la fréquence d'interrogation variable comprend le fait:
de demander la valeur d'identifiant de réseau par interrogation (2-2) avec une fréquence qui diminue au cours du temps.

10. Procédé de la revendication 9, dans lequel la demande de la valeur d'identifiant de réseau par interrogation avec la fréquence qui diminue au cours du temps comprend le fait :
de demander la valeur d'identifiant de réseau par interrogation (2-2) avec une fréquence qui décroît linéairement au cours du temps ; ou
de demander la valeur d'identifiant de réseau par interrogation (2-2) avec une fréquence qui diminue de manière non linéaire au cours du temps.

11. Procédé de la revendication 9, dans lequel la demande de la valeur d'identifiant de réseau par interrogation avec la fréquence qui diminue au cours du temps comprend le fait :
de demander la valeur d'identifiant de réseau par interrogation (2-2) avec une durée variable entre des interrogations individuelles, la durée variable entre les interrogations individuelles commençant à une valeur minimale et étant incrémentée à chaque interrogation à moins que la durée variable n'atteigne une valeur maximale.

12. Procédé de la revendication 11, dans lequel les interrogations individuelles sur la base de la première fréquence d'interrogation sont séparées par une première durée, la première durée étant égale à la valeur maximale de la durée pendant l'interrogation sur la base la plus fréquente.

13. Procédé de la revendication 11, dans lequel la valeur minimale est de 5 secondes et la valeur maximale est de 15 minutes.

14. Procédé de l'une quelconque des revendications 1 à 13, dans lequel la demande de la valeur d'identifiant de réseau par interrogation sur la base la plus fréquente comprend le fait :
de demander la valeur d'identifiant de réseau par interrogation (5-2) selon l'événement qui s'est produit.

15. Procédé de la revendication 14, dans lequel la demande de la valeur d'identifiant de réseau par interrogation selon l'événement qui s'est produit comprend au moins l'un parmi :
demander la valeur d'identifiant de réseau par interrogation (5-2) pendant une durée qui dépend de l'événement qui s'est produit ;
demander la valeur d'identifiant de réseau par interrogation (5-2) avec une fréquence constante qui dépend de l'événement qui s'est produit ; et
demander la valeur d'identifiant de réseau par interrogation (5-2) avec une fréquence variable qui dépend de l'événement qui s'est produit.

16. Procédé de l'une quelconque des revendications 1 à 15, dans lequel la demande de l'identifiant de réseau par interrogation ne se produit que si une radio d'accès sans fil (11) est activée.

17. Procédé de l'une quelconque des revendications 1 à 16, dans lequel la valeur d'identifiant de réseau comprend l'une :
d'une valeur d'Identifiant Système 'sied' ;
d'une valeur d'un code pays du réseau mobile 'MCC' et d'une valeur d'un code de réseau mobile 'mnc' ; et/ou
d'une valeur d'identifiant de secteur ou d'une valeur de Code Couleurs.

18. Support lisible par ordinateur (16) sur lequel sont stockées des instructions pouvant être exécutées par ordinateur devant être exécutées sur un processeur (19) d'un dispositif informatique (10) de manière à mettre en oeuvre le procédé de l'une quelconque des revendications 1 à 17.

19. Dispositif sans fil (10) comprenant un identifiant de réseau interrogeant un composant (16) et un composant radio (12) adaptés pour réaliser les étapes de traitement du procédé de l'une quelconque des revendications 1 à 17.
